# EUROPEAN PATENT APPLICATION

(11) **EP 1 148 432 A2**
(43) Date of publication of application: **24.10.2001**
(21) Application number: 01108471.2
(22) Date of filing: 04.04.2001
(51) Int. Cl.: G06F 17/60

(54) **Platform for handling digital contents coming from heterogeneous sources**

(30) Priority: 13.04.2000 IT MI000826
(71) Applicant: TXT e-solutions S.P.A., 20128 Milano (IT)
(72) Inventor: Braga Illa, Alvise, 20123 Milano (IT); Guida, Marco Edoardo, 20129 Milano (IT); Pirovano, Tullio Beniamino, 20059 Vimercate (Milano) (IT)
(74) Representative: Petruzziello, Aldo

(57) **Abstract**

A platform (CIMP; 1) for handling digital contents coming from heterogeneous sources comprising:
- an interface (UVCS; 3) with the heterogeneous sources (DCS) digital contents, designed to acquire heterogeneous digital contents (DC), in various formats, coming from heterogeneous sources (DCS) to describe them in a uniform way in an internal format (SIDC) independent of the input format;
- a central core (2) for storing and managing the digital contents (SIDC) coming from the interface with the heterogeneous sources;
- an interface (VTL; 4, 5) with standard tools (DTP) for processing digital contents used by operators (17, 20) responsible for managing the digital contents stored in the platform (1), to obtain value-added digital contents in internal format (VADC);
- an interface (MID; 6) with digital media (DM) designed to carry out a conversion of the internal format of the value-added digital contents (VADC) in a format designed for publishing of the value-added digital contents on respective digital media (DM).

## Description

The present invention relates to a platform for handling digital contents coming from heterogeneous sources and to the distribution of said digital contents on independent media.

The technological convergence of Internet, mobile telephony and television is progressively delineating a new market, that of the "on-line content industry". This market is characterized by the assertion of a thorough-going digital-content industry, which arises from the convergence of different industrial sectors, both traditional ones and new ones, and which is fed by the integration of traditional and new media.

In this scenario, the most innovative and interesting segment is that of the portals and sites specialized in information, which are characterized by a thorough-going numerical explosion and by a dynamism of contents and modes of presentation of said contents.

There currently exist various companies that possess platforms for handling digital contents. Amongst these companies are known the portals present on the Internet network, such as Altavista® , Yahoo® , Virgilio® , etc., which provide platforms for acquisition of digital contents.

The digital contents are of various types, such as general news, sports news, stock-exchange indices, weather bulletins, geographical information, etc., and come from various information sources.

At present, in order to send digital contents in real time to the acquisition platform, various systems are known, such as telefax, telex, E-mail, etc. Consequently, the formats in which the said digital contents are sent to the acquisition platform are of different types. It is sufficient to consider that an E-mail message may contain attachment files in various formats, such as the doc format for Word® files, the xls format for Excel® files, ppt for Power Point® files, pdf for Acrobat Reader® files, and so forth.

For this reason, an acquisition platform according to the prior art must handle these digital contents formatted in various formats and distribute them on various media, such as Web sites, SMS (cellphones), WAP (Wireless Application Protocol), Teletext (televideo), digital TV, etc. As a result, the Web pages of the portals on Internet have digital contents in various formats, such as html, doc, and pdp. Instead, other media accept only their own pre-set format, and consequently it is necessary to convert the digital contents for these media into the given format.

As a result, the main problems of the editors that manage these sites or portals may be summed up as follows:
- effective management of the digital contents coming from heterogeneous sources with publishing on various digital media;
- maximized valorization of the digital contents through effective methods for the use and re-use of the contents themselves; and
- construction of a "media asset management" system (i.e., a system independent of the media) for managing and regulating all the activities of the on-line editing firms.

An object of the invention is to solve the above drawbacks by providing a platform for handling digital contents that will enable optimized acquisition of flows coming from heterogeneous sources.

Another object of the present invention is to provide such a platform for handling digital contents that will enable optimized publishing of the contents on different digital media.

Yet a further object of the present invention is to provide such a platform for handling digital contents that will enable definition of access points to the system, unified as regards the tools for processing of the contents, definition of the editing protocol, and management of the system.

These objects are achieved, in accordance with the invention, with the characteristics listed in the annexed independent Claim 1.

Advantageous embodiments of the invention appear from the dependent claims.

The present invention envisages integrating different and heterogeneous sources of digital contents in a common management and information platform with the aim of enabling a uniform management of the digital contents coming from said heterogeneous sources. In practice, the heterogeneous sources are provided with specific drivers that convert the digital contents into a specific format. In this way all the digital contents coming from the heterogeneous sources may be stored in the platform in this specific format and subsequently processed by the operators responsible for this task.

Once rendered presentable for publishing, the digital contents are sent to the respective media. Each medium is provided with a specific driver for reading the format of the digital contents coming from the platform.

The invention is aimed in particular at the sector of on-line editing. In this sphere, the advent of the new media and the convergence of digital systems necessarily impose the transition from a model of editing centred and developed around the media towards a model - which is certainly more effective and up-to-date - centred on the digital contents through the separation of the contents from the specificity of presentation typical of the particular medium adopted.

The advantages of the system according to the invention are:
- maximized valorization of digital contents by exploiting to the full the enormous potentialities of diffusion made available by the new media (Web, SMS, WAP, Teletext, digital TV);
- operating flexibility and simplicity in the use, re-use and updating of the continuous-cycle contents;
- flexibility in the distribution of integrated and dynamic contents;
- dynamic and flexible integration of the contents on a number of media;
- scalar-type architecture of the system, which enables handling of large volumes of data; and
- system based exclusively on a single type of format for the internal description of the contents. This enables fast modifications to be made on the structure of the contents to be published.

Further characteristics of the invention will appear more clearly from the detailed description that follows, referring to a purely exemplary and therefore non limiting embodiment thereof, illustrated in the appended drawings, in which:
Fig. 1 is a block diagram which illustrates schematically the architecture of the system according to the invention and the elements that characterize it;
Fig. 2 is a block diagram illustrating a preferred embodiment of the platform for handling digital contents coming from heterogeneous sources according to the invention.

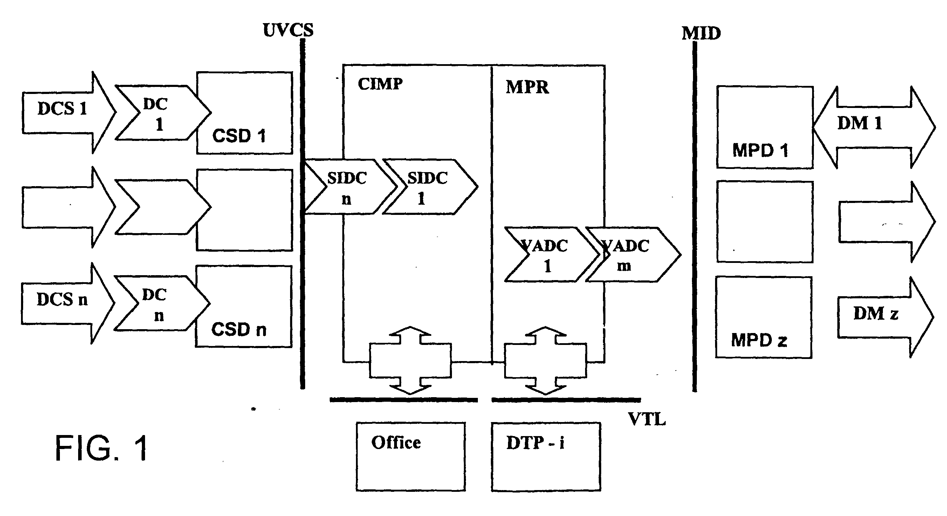

The architecture of the system according to the invention is described with reference to Fig. 1.

A plurality of digital-content sources (DCS) is considered. Each digital-content source DCS outputs digital contents (DC) characteristic of said source.

Each digital-content source DCS is provided with a digital-content source driver (CSD) of its own. The digital-content source driver CSD is a software module, characterized by an interface and a protocol, which converts the flow of digital contents DC coming from said source into a neutral flow of data that is independent of the original source.

Then, the driver CSD enables mapping of the digital contents DC coming from the source DCS on a unified virtual content source (UVCS).

The unified virtual content source UVCS is an interface specification that represents a flow of data in a generic way. The interface specification UVCS is the internal representation of a generic flow of data.

Then, from the interface specification UVCS there exit source-independent digital contents (SIDC), which are sent to a common information-management platform (CIMP).

With the system according to the invention, a new digital-content source DCS, equipped with its own driver CSD, can connect to the platform CIMP to send digital contents. This connection of the new source DCS to the platform CIMP does not call for the intervention of software programmers specialized in conversion of the data coming from the source into a format for handling said data that can be used by the platform. In fact, the said connection takes place in plug-and-play mode, since the driver CSD carries out conversion of the digital contents of the source into the format used by the platform.

Programming of the driver CSD for the specified source DCS is an operation that requires just a single effort. In fact, once the driver CSD is programmed, the source will be able to send the digital contents to the platform each time, without the need to modify or reprogram the said driver CSD.

The platform CIMP translates the digital contents SIDC coming from the interface specification UVCS into value-added digital contents (VADC) as a result of an activity of integration of the flows of digital contents SIDC performed automatically, or else as a result of the work of the operator, such as a journalist, responsible for processing the digital contents.

Source-independent digital contents SIDC, stored in the platform CIMP, may be "reworked" or more in general handled using market standard tools, such as the Microsoft Office® software package (Word, Excel, Access, Power Point) or other tools, such as Adobe pagemaker® .

For this purpose, a specific interface layer (VTL) is envisaged for commercially available tools. The interface layer VTL defines the rules for mapping the internal description of the source-independent digital contents SIDC in the particular format adopted by the specific tool program.

The value-added digital contents VADC are ready to be published on one or more digital media (DM), according to media-presentation rules (MPR). The said media-presentation rules MPR are defined by the person responsible for the process of publishing, namely, the editor in the case of on-line editing, by the head of external relations in the case of a publishing of firm contents in Internet, or by the personnel manager in the case of firm data corresponding to the management of human resources to be published in Internet.

The media-presentation rules MPR constitute a software module, which, on the basis of commands issued by external operators, enables association to a given data flow, described in a (generic) internal format, the typical presentation attributes of a particular medium DM.

For this purpose, a generic tool is used, such as a DTP (DeskTop Publishing) tool, which, by means of the interface specification VTL, can act on the digital contents SIDC of the platform CIMP.

To isolate the peculiar characteristics of presentation of a specific medium DM, a media-independent device (MID) has been defined. The media-independent device MID is an interface specification that describes a generic digital medium DM. The media-independent device interface specification MID is the internal representation of a generic digital medium DM that presents the result of the integration of various digital contents DC performed according to the rules and filters of the platform CIMP. These filters or rules are the result of the professional contribution of journalists in the case of on-line editing or of editors in the case of management of contents; that is, they are the fruit of a series of filters or constraints imposed in real time for regulating the process of publishing in the case of flows of a "streamed" type, for example stock-market data, which flow in the platform CIMP in "unattended" mode.

The mapping of the media-independent device MID on an actual medium DM - i.e., the association of the presentation attributes described abstractly with the physical characteristics of the medium DM - is made by means of a media-presentation driver (MPD). The media-presentation driver MPD translates the description of the generic medium identified by the interface specification MID on the peculiarities of a specific medium DM and on the basis of the presentation rules of the specific medium described in the software module MPR.

The development of a media-presentation driver MPD is an activity required only once and does non need any updating. The platform CIMP includes a collection of drivers MPD for various types of media DM. The addition of a new medium DM that is to receive digital contents from the platform CIMP, will exclusively entail the development of a new driver MPD for this medium.

The platform CIMP can be described as a database capable of storing various fundamental entities and providing a series of services for handling the operations on said entities.

In the database of the platform CIMP the following entities are stored:
- objects of the source-independent digital contents SIDC type coming from the process of transformation of a specific digital content DC through the interface specification UVCS;
- objects of the value-added digital contents VADC type, which come from the process of integration and modification of the source-independent digital contents SIDC. The value-added digital contents VADC also contain the integration and navigation rules between the source-independent digital contents SIDC;
- objects of the media-presentation rules MPR type, which describe the rules of mapping of the value-added digital contents VADC on the media-presentation driver MPD; and
- objects of the user profile UP type, which describe the profiles of the users that can access the platform CIMP with the description of the levels of authorization for the various objects forming part of the platform.

The services that make up the platform CIMP are the following:
- search service for navigation and retrieval of the contents of the platform CIMP available for use of the operator who is to rework the contents for them to be published;
- classification service for the classification of the contents stored in the platform;
- push service for handling publishing of the digital contents in the case of unidirectional diffusion processes. The push service envisages a generation of the palimpsest of contents that are to be sent to the medium;
- workflow engine for managing the process of approval of publishing of digital contents on the media;
- authentication service for managing access to the platform and system security. This service controls access to the platform and to the digital contents of the platform, as well as the operations possible within the platform; and
- version service for tracking the versions of a content, which enables the history of the modifications made on a particular digital-content object to be kept.

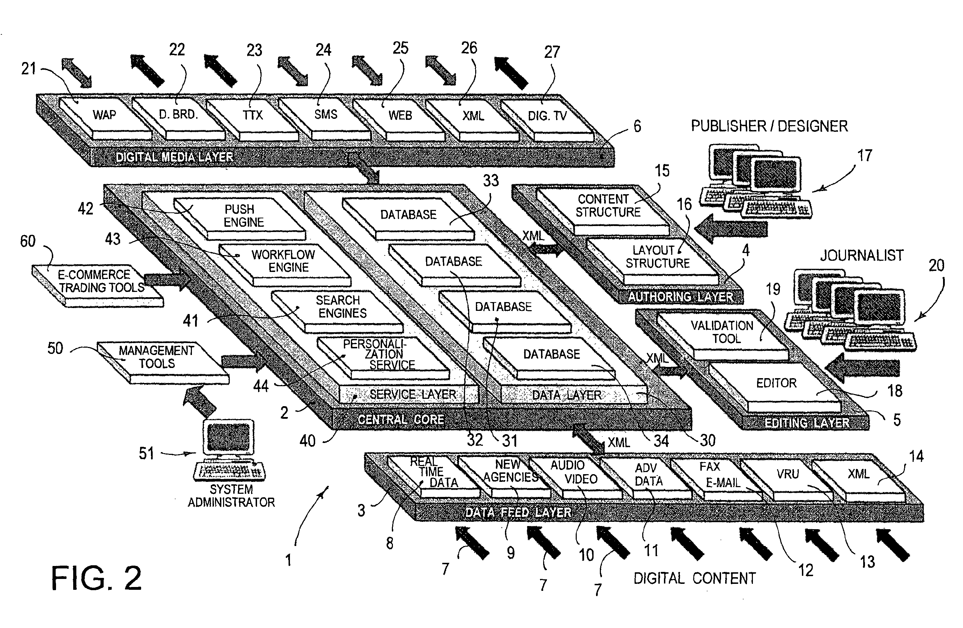

In what follows, with reference to Fig. 2, a preferred embodiment of the invention is described, referring particularly to an example of on-line editing.

The structure of the system is represented by a platform designated as a whole by the reference number 1. The platform 1 comprises a central core 2 for storage and processing of the digital contents, surrounded by various interface layers with devices external to the platform.

The interface layers comprise:
- a data-feed layer 3 for interfacing with the heterogeneous sources that supply the digital contents;
- an authoring layer 4 for interfacing with the operators that are responsible for publishing on the media;
- an editing layer 5 for interfacing with the operators that are responsible for entering the digital contents;
- a digital-media layer 6 for interfacing with the digital media on which the digital contents are to be published.

The data-feed layer 3 receives the digital contents 7 coming from differentiated sources, such as the stock exchange, the weather bureau, agencies, and multimedia contributions. The data-feed layer 3 interprets the data 7 coming from the heterogeneous sources and appropriately describes said data in such a way that they can be handled by the central core 2.

For this purpose, the data-feed layer 3 comprises a set of modules and rules for handling the various data flows in a unitary way. These modules may be modules for real-time data 8, news agencies 9, audio and video 10, advertising data 11, telefax and E-mail 12, Voice Respond Units VRUs 13 (i.e., machines that automatically respond to voice commands), or data in XML format 14.

The description language used by said modules is the XML language (eXtensible Markup Language). XML language derives from the evolution, in the sense of a simplification, of Sgml, a highly complex meta-language developed in the seventies. This language returned to the attention of experts in the nineties with the diffusion of the Webs and of HTML language for publishing on the Webs. HTML has very limited potential as compared to XML.

The main novelty of XML consists in being accompanied by the description of its own structure. This characteristic not only differentiates it from HTML, but also from the description logic of traditional databases, which needs to be accompanied by the diagram of the relationships, by the files that describe tables, or by the definition of the types of external data. Thanks to the above self-explanatory characteristic, the data represented according to the XML standard become immediately processable.

The authoring layer 4 provides the tools for defining the editorial layout, namely the format, the graphical styles, and the mode of presentation of the digital contents on the specific output digital media. The technology utilized for the description of the editorial layout is XSL (XML Style Language) which, associated to XML, enables direct generation of the output format for a given medium. This system enables a marked dynamism to be achieved. In fact, it is sufficient to modify XLS with appropriate tools to obtain rapidly a new editorial layout. These tools are a content structure 15 and a layout structure 16. Such tools are directed at those 17 who are responsible for the presentation of the digital contents, hence to the editor and to the graphics designer.

The editing layer 11 provides the tools for the generation and entry of the contents into the central core 2. These tools comprise an editor 18 for processing texts, to which are associated tools for the content validation 19, such as syntax and period analyzers, specific dictionaries, rules of style. These tools are addressed to those responsible for producing the contents, hence to journalists 20.

In this way, the journalist 20 can concentrate on the generation of the content using dedicated tools, without bothering about the mode of presentation of the content.

The digital media layer 6 is entrusted with the conversion of the format of a particular content coming from the central core 2 and described in XML, into a format suitable for a given medium, using XSL. The digital-media level includes all the peculiarities of the specific media that interface with the structure 1. These peculiarities are defined by conversion modules for specific media, such as WAP (Wireless Application Protocol) 21, Data Broadcasting 22, Teletext (televideo) 23, SMS (cellphones) 24, Web 25, XML 26, and digital TV 27.

The central storage and processing core 2 comprises a data layer 30 formed by an object database. The said data layer 30 comprises a database 31 for storing the contents, a database 32 for storing the description of the contents, a database 33 for storing publishing rules, and a database 34 for storing the profiles of the various users that access the platform 1.

The central core 2 also comprises a service layer 40. The service layer 40 comprises a search engine 41 for searching for the digital contents stored in the database 31, and an engine 42 for the generation of the palimpsest in the case of digital contents addressed to unidirectional media, such as teletext. In the case of teletext, the palimpsest is made up of rolling pages, which are sent cyclically, for example every twenty seconds, and interrupt pages, which are entered into the cycle in an asynchronous way and just once following upon the occurrence of a given event.

The service layer 40 further comprises a workflow engine 43 for handling the process of approval of publishing of digital contents on the corresponding media, and a personalization service 44, which enables a presentation of the digital contents according to the preferences expressed by the user himself during registration. For example, in the case of a Web page with stock-market data, the user can define a personal profile and build the structure of his own Web page (personal home page) in which to display only the trend of certain securities, and not others.

The personalization service 22 is available with media that enable an interactive (bidirectional) dialogue with the platform. For unidirectional media (e.g., teletext), interactivity is obtained by means of integration with another medium, typically the telephone. In the case of teletext, the integration with the telephone gives rise to the interactive teletext service, where it is possible to send, in broadcast mode as usual, a teletext page with personal, but anonymous, data, such as one's own statement of account or the list of movements of the one's own bank account.

The platform 1 moreover envisages tools 50 for managing the system that can be used by the system administrator 51. The system-management tools 50 may be tools for monitoring resources, network-management tools, database-management tools, etc.

Finally, the platform 1 also envisages tools for electronic trading (E-commerce) 60, which are a support for on-line purchase or transaction services. In this case, the user who accesses the electronic-trading service has the possibility of selecting a given article, analyzing its characteristics, and possibly proceeding to its purchase. The integration of the platform 1 with the tools for electronic trading 60 enables extending on-line trading from the purchase of physical goods to the purchase of intangible goods, such as digital contents.

Through the services offered by the platform 1 it is possible to arrange for virtual meetings between the sellers and buyers of digital contents. Whoever possesses and generates the contents, for example a news agency, can exhibit his own offer of contents (news, stock-exchange data, weather-report data, films, etc.) on the platform 1. For each type of digital content, the buyer can analyze the characteristics (language, frequency of updating, authors, etc.), draw up a personalized contract, fix the duration of the contract, define on which and how many media to effect the distribution, and verify immediately the cost of the operations.

By means of the integration of the platform 1 with the means for electronic trading, purchasing of digital contents is also possible on demand in pay-to-use mode.

The integration of a platform for management and distribution of digital contents with a platform comprising electronic-trading means, provides the technological basis for managing business processes in an effective and innovative way in a context of on-line editing.

Various modifications of detail within the reach of a person skilled in the art can be made to the embodiments of the present invention, in any case falling within the scope of the invention expressed in the appended claims.

## Claims

1. A platform (CIMP; 1) for handling digital contents, comprising:
- an interface (UVCS; 3) with heterogeneous digital content sources (DCS), designed to acquire heterogeneous digital contents (DC) in various formats, coming from said heterogeneous sources (DCS) to describe them in a uniform way in an internal format (SIDC), which is independent of the input format;
- a central core (2) for storage and management of said digital contents (SIDC) coming from the interface with the heterogeneous sources;
- an interface (VTL; 4, 5) with standard tools (DTP) for processing digital contents, said standard tools (DTP) being used by operators (17, 20) responsible for processing said digital contents stored in said central core (2) of said platform (1), to obtain value-added digital contents in internal format (VADC);
- an interface (MID; 6) with digital media (DM) designed to carry out a conversion of the internal format of the value-added digital contents (VADC) into a format designed for publishing of said value-added digital contents (VADC) on respective digital media (DM).

2. The platform (CIMP; 1) according to Claim 1, **characterized in that** each digital-content source (DCS) connected to said platform (CIMP; 1) is supplied with a driver (CSD) designed to convert the flow of digital contents (DC) coming from said source (DCS) into a neutral flow of digital contents independent of the original source, which is designed to be stored in said platform.

3. The platform (CIMP; 1) according to Claim 1 or Claim 2, **characterized in that** each digital medium (DM) connected to said platform (CIMP; 1) is provided with a driver (MPD) that translates the internal format of the value-added digital contents (VADC) stored in said platform into a specific format suitable for the given digital medium (DM) in which said digital contents are to be published.

4. The platform (1) according to any one of the preceding claims, **characterized in that** said central core (2) comprises a data layer (30) comprising a database for storing digital contents and a service layer (40) consisting of procedures for handling said digital contents.

5. The platform (1) according to Claim 4, **characterized in that** said data layer (30) comprises a database (31) for storing the contents, a database (32) for storing the description of the contents, a database (33) for storing publishing rules, and a database (34) for storing the profiles of the various users that access the platform (1).

6. The platform (1) according to Claim 4 or Claim 5, **characterized in that** said central core (2) comprises a search engine (41) for searching for the digital contents stored in the data layer (30), an engine (42) for generating the palimpsest in the case of digital contents addressed to unidirectional media, a workflow engine (43) for handling the process of approval of publishing of the digital contents on the corresponding media, and a personalization service (44) to enable a presentation of the digital contents on the basis of preferences expressed by the user during registration of the personalization service (44).

7. The platform (1) according to any one of the preceding claims, **characterized in that** said interface (VTL; 4, 5) with standard tools (DTP) for processing digital contents comprises:
- an authoring layer (4) designed to provide tools for defining the modalities of presentation of the digital contents on the specific digital media; and
- an editing layer (5) designed to provide the tools for generating and entering digital contents in the central core (2) of the platform (1).

8. The platform (1) according to any one of the preceding claims, **characterized in that** it comprises system-management tools (50) that may be used by a system administrator (51).

9. The platform (1) according to Claim 8, **characterized in that** said system-management tools comprise tools for monitoring system resources, tools for network management, and tools for managing the database of the platform (1).

10. The platform (1) according to any one of the preceding claims, **characterized in that** it is integrated with tools (60) for electronic trading, in order to manage on-line the electronic trading of the digital contents, such as sale, acquisition, management and distribution on the media.

11. The platform (CIMP; 1) according to any one of the preceding claims, **characterized in that** said standard tools (DTP) for processing the digital contents are Microsoft Office® and Adobe Pagemaker® .

12. The platform (1) according to any one of the preceding claims, **characterized in that** said digital contents (DC) coming from heterogeneous sources are real-time data (8), news-agency data (9), audio and video data (10), advertising data (11), data coming from telefax and E-mail (12), data coming from voice respond units VRUs (13), and data in XML format (14).

13. The platform (1) according to any one of the preceding claims, **characterized in that** said digital media (DM) are WAP (Wireless Application Protocol) 21, Data Broadcasting 22, Teletext (televideo) 23, SMS (cellphones) 24, Web 25, XML 26, and digital TV 27.

14. The platform (1) according to any one of the preceding claims, **characterized in that** the internal format in which said digital contents are stored and managed in said central core (2) of said platform (1) is the XML (eXtensible Markup Language) format.
